# EUROPEAN PATENT APPLICATION

(11) **EP 3 671 958 A1**
(43) Date of publication of application: **24.06.2020**
(21) Application number: 19160442.0
(22) Date of filing: 04.03.2019
(51) Int. Cl.: H01Q 15/14, H01Q 15/18, G02B 7/185, G01S 7/40

(54) **CORNER REFLECTOR FOR REFLECTING ELECTROMAGNETIC WAVES**

(30) Priority: 21.12.2018 DE 102018222821
(71) Applicant: Robert Bosch GmbH, 70442 Stuttgart (DE)
(72) Inventor: Burdin, Francois, 1082 Budapest (HU)

(57) **Abstract**

This invention refers to a corner reflector (1) for reflecting electromagnetic waves in the same direction as the waves are inclining, the corner reflector comprising three planar surfaces (2, 3, 4) arranged orthogonally to each other and wherein the at least one of the three surfaces is arranged movable so that the ratio of the reflected electromagnetic waves, referred to the amount of inclining electromagnetic waves, can be modified by shifting the movable surface.

## Description

The present invention relates to a corner reflector for reflecting electromagnetic waves in the same direction as the waves are inclining, the corner reflector comprising three planar surfaces arranged orthogonally to each other and wherein the at least one of the three surfaces is arranged movable so that the ratio of the reflected electromagnetic waves, referred to the amount of inclining electromagnetic waves, can be modified by shifting the movable surface.

### Prior Art

The patent publication document DE 197 07 590 A1 discloses a method and an apparatus for adjusting the alignment of a beam characteristic of a distance sensor, in particular of a proximity radar for a motor vehicle. An apparatus for positioning a motor vehicle, preferably a headlight aiming device, is joined to the target object for the distance sensor. Also provided is a service unit with which measured values or data of the distance sensor can be read out. On the basis of at least one predefined criterion, the measured values or data are analysed in such a way that necessary displacement directions of the distance sensor can be displayed by way of the service unit. Preferably, the capability of the distance sensor to determine angular positions of detected target objects is utilized. Otherwise, adjustment is performed to predefined reception levels.

### Disclosure of the invention

It is the aim of the present invention to provide a corner reflector, which is capable to change its reflectivity for electromagnetic waves and allows advantageously an adapted adjustment for measuring and testing applications in radio transmitting technology.

This technical problem is solved by an object comprising the features as shown by the independent claim. Advantageous arrangements and variations of the invention are given by the depending claims.

Advantageously, the corner reflector is arranged so that the wave amplitude or the power of the reflected electromagnetic waves is modified by shifting the at least one movable surface in a direction, perpendicular to the normal vector of the at least one movable surface.

In general, trihedral corner reflectors have the property that an inclining electromagnetic wave is reflected on every of the three orthogonal planes of the trihedral corner reflectors and the resulting outgoing electromagnetic wave has the parallel orientation, with the propagation direction in opposite direction. If the reflection losses on the three orthogonal planes are neglected, the power of the outgoing wave is essentially the same as the power of the inclining electromagnetic wave.

As a result of the invention, the ration of the reflected portion of the outgoing electromagnetic wave in regard to the inclining electromagnetic wave can be modified and reflected power can be adjusted to lower reflection ratios.

It is further advantageously that the at least one movable surface of the corner reflector is shifted in the direction so that the area of the surface, contributing to the reflecting of the electromagnetic waves is diminished. This can be achieved as the remaining area of the surface, not contributing to the reflecting of the electromagnetic waves, is shifted to those sides of the non-movable surfaces where no reflection of electromagnetic radiation is effected. In other words, the at least one movable surface is shifted in direction to the opposite sides of the active sides of the other two reflecting surfaces and the portion of the at least one movable surface that contributed to the reflection gets smaller and smaller while the movable surface is shifted "behind" the other two reflecting surfaces.-

A further advantageous embodiment can be arranged if the trihedral corner reflector comprises 3 surfaces, whereas one surface is arranged movable and the other two surfaces are arranged non-movable, so that they are fixed and the ratio of the reflected electromagnetic waves is modified by shifting the at least one movable surface in a direction parallel to the normal vector of the at least one movable surface.

Comparing this embodiment with the other embodiment as disclosed earlier, the size of the movable surface, which contributed to the reflection remains unchanged but the areas of the non-movable, because fixed surfaces is reduced because the movable surface shifts in parallel to the normal vector of the movable surface so that the contacting edges between the movable surface and the two non-movable surfaces remain in contact while moving. In contrast, the earlier disclosed embodiment reduced the area of the movable surface to change the ratio of the reflected waves. However, in both cases no tilting of the at least one movable surface in regard to the other fixed surfaces is done and the right angles between all surfaces are maintained at every moment.

It is further advantageous, if the corner reflector is arranged so that the at least one movable surface is moved so that its edges, which are in contact with the other non-movable surfaces (3, 4), remain in contact with the non-movable surfaces (3, 4) while shifting the at least one movable surface (2) in parallel to its normal vector (15).

Further, it is advantageous to realize the aforementioned arrangement by using mechanical inversion, so that the one movable surface is changed to be fixed and the two further surfaces, which had been fixed before, are nor arrange movable so that both surfaces are moved commonly together. Further, the direction of the two movable surfaces is in parallel to the normal vector of the one fixed surface. The right angles between all three surfaces of the arrangement remain right angles at every time.

Advantageously, the corner reflector is manufactured by material or a combination of materials so that the at least one surface of the corner reflector is made either from metallic material or from synthetic or plastic material and coated with metallic material. Hereby, it is necessary to select a metallic material that is capable to reflect electromagnetic waves. The two further non-movable surfaces need also to be manufactured from a of a metallic material or from an electrical insulating material like synthetic or plastic and coated with metallic material in order to reflect electromagnetic waves.

The three surfaces of the trihedral corner reflector further are arranged advantageously that so that each surface of the three planar surfaces comprise either three surfaces with the shape of a sector of a circle or three surfaces, each having triangular shape or even all three surfaces having quadratic shape. Additionally shapes of the three surfaces are also possible and are not limited in their shape as long as the surface has one corner showing a vertex of 90 degree. Combinations of different shapes are also possible and can be combined by the person skilled in the art as necessary due to the needed application.

It is further advantageously that the corner reflector is arranged so that the at least one movable surface is shifted by use of an electric drive, a pneumatic drive, a hydraulic drive or a manually drive. With this mentioned embodiment, the movable surface can be controlled by the use of the drive without disassembling and reassembling the trihedral corner reflector by using surface parts different in their reflecting surface properties. The drive can be mounted so that the at least one movable surface can be shifted stepless for adapting the active portion of the at least one movable reflecting surface continuously to the presently needed properties.

In another advantageously embodiment of the invention, the corner reflector comprises features that allow the displaying of the presently adjusted reflection coefficient of the trihedral arrangement. This can be achieved by using a mechanical scale with at least one indicator or by using a display. The amount of the present extent of the at least one movable surface and therewith the active portion of the movable surface which contributed to the reflection ration of the trihedral arrangement results in a reflection coefficient for the whole arrangement. This reflection coefficient can be modified by shifting the movable surface, for example by using the manual drive or the electric drive for shifting. Due to this advantageously embodiment, the scale or the display can be calibrated so that it shows the reflection coefficient of the whole arrangement.

The shifting of the at least one movable surface can be achieved for example by the use of a worm gear or a worm drive which is driven by the electrical drive or the manual drive or the pneumatic drive or the hydraulic drive. This worn gear or worn drive can be fixed at the outer and passive surface of the at least one movable surface part so that the movable surface can be moved in a direction which is perpendicular to the two additional fixed surfaces.

This arrangement comprising a scale or a display and comprising a manual or electrical or pneumatic or hydraulic drive can be calibrated so that the scale or the display indicates the extent of the traverse path of the movable surface, or so that the scale or the display indicates the amount of the remaining area of the movable surface which still contributes to reflection together with the two fixed surfaces or can be calibrated so that the scale or the display indicates the reflection ratio between outgoing power related to incoming power of the electromagnetic waves.

Further characteristics, applications and advantages of the invention can be derived from the following description of embodiments as shown in des written disclosure or disclosed by the figures. All shown or presented features constitute separately or in any combination the object of the invention and independently from their presentation in the patent claims or in the back references and independently from the disclosure and presentation in the drawings.

### Brief description of the drawings

In the following, there are shown different embodiments in the figures of the drawings for explanation of the present invention without limiting the scope of the claims. There is shown in
- figure 1: a trihedral corner reflector as known from the prior art,
- figure 2: different shapes of their embodiment in the figures a) to c),
- figure 3: different views of the same trihedral corner reflector with different shifts of the movable surface,
- figure 4: other different views of another trihedral corner reflector with different shifts of the movable surface,
- figure 5: one further embodiment of the trihedral corner reflector with different shifts of the movable surface and
- figure 6: another embodiment of the trihedral corner reflector with different shifts of the both movable surfaces.

### Embodiments of the Invention

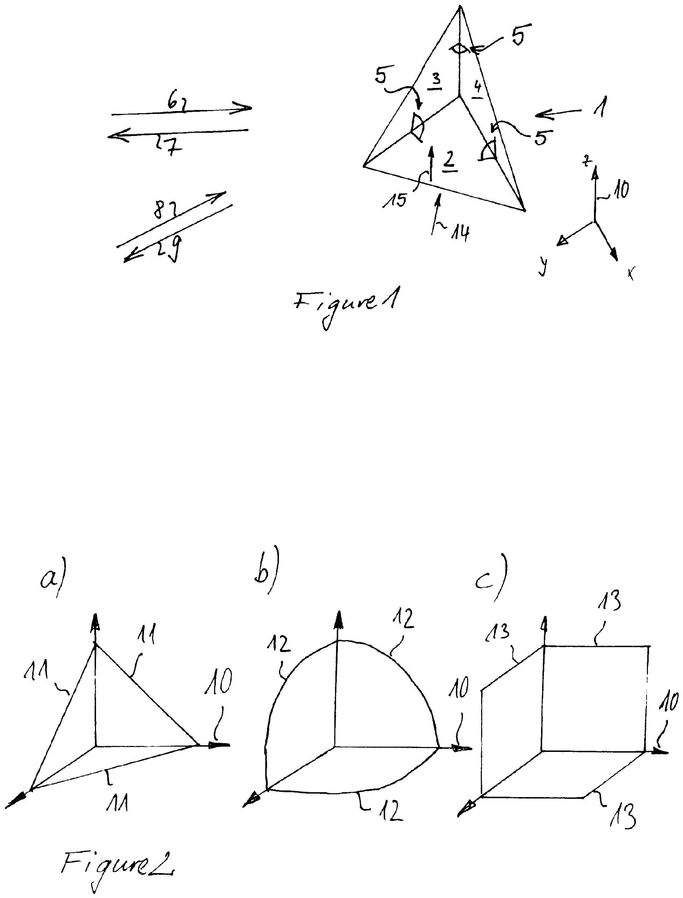

In figure 1, there is shown a trihedral corner reflector 1 as known from the prior art. This reflector arrangement consists of three surfaces 2, 3, 4, arranged in orthogonal angles 5 to each other. For explanation purposes, there is shown a Cartesian coordinate system 10 with the three orthogonal axes x, y and z. The axes x and y create a horizontally orientated plane, to which the first planar surface 2 of the corner reflector is orientated in parallel. The axes y and z create another vertically orientated plane, to which the second planar surface 3 is orientated also parallel. The axes x and z of the Cartesian coordinate system 10 create another, also vertically orientated plane, to which the third planar surface 4 of the corner reflector 1 is orientated parallel. All three planar planes 2, 3 and 4 of the corner reflector are arranged so that each planar surface 2, 3, 4 have an orthogonal angle 5 to any other planar surface 2, 3, 4 of the corner reflector. The material, from which the planar surface are made is electrically conductible with a very low specific resistance, so that electromagnetic waves, inclining on one of the planar surfaces 2, 3, 4 are reflected, following the physical laws for reflections of waves. Alternatively, the planar surfaces can be fabricated from any other material, also electrically non-conductive materials and then be coated with a metallic material. Using this embodiment of coating non-conductive materials, it is important to assure a minimum thickness of the electrically conductive coating layer, which can be calculated from the electrical Skin effect, so that the minimum frequencies, which are expected to be reflected, are reflected effectively.

A trihedral corner reflector 1 shows the known property, that a first inclining electromagnetic wave, which is shown exemplary by the arrow 6, is reflected at each of the three planar surface 2, 3, 4 and is reflected back from the corner reflector 1 as outgoing electromagnetic wave 7. This outgoing electromagnetic wave 7 has the same orientation of its propagation direction as the inclining wave 6, only the propagation direction is in exactly in opposite direction. The propagation directions of the first inclining wave 6 and the first outgoing wave 7 are orientated antiparallel.

If another, second inclining electromagnetic wave shows a different propagation direction, like shown by arrow 8, the corresponding second outgoing electromagnetic wave, reflected back by the corner reflector 1, also shows exactly antiparallel propagation direction 9 than the second inclining electromagnetic wave 8.

This property of trihedral corner reflectors 1, that the outgoing wave shows an antiparallel orientated outgoing propagation direction 7, 9 in relation to the corresponding inclining wave 6, 8 can be used for radar-based detection systems, because this corner reflector 1 can simulate detected objects due to its strong reflection properties and the well-defined reflection direction.

One property of such corner reflector as shown in figure 1 is the ratio of the reflected electromagnetic waves. While doing testing with radar-based sensors, the ratio of the amplitudes between outgoing and corresponding inclining waves cannot be altered. By using different materials with different electrically conductive materials, it is possible to realize differently intense reflection properties of the simulated object, however this cannot be varied strapless and can only be done by replacing one corner reflector 1 by a different one.

The present invention can be technically refined so that a stepless and continuously ratio of reflection amplitudes between outgoing wave 7, 9 and the corresponding inclining wave 6, 8 is enabled. This aim can be achieved by arranging at least one of the planar surface 2 movable in relation to the other two planar surfaces 3, 4. This is shown by the arrow 14 in figure 1, representing the moving direction of planar surface 2. Planar surface 2 is shifted so, that the area of surface 2, which contributes to reflections together with the other two surfaces 3 and 4, is reduced. If the effective area of surface 2 gets smaller, the reflection ratio between amplitudes of outgoing wave 7, 9 and the corresponding inclining wave 6, 8 is also reduced. This enables the corner reflector 1 with at least one movable surface 2 to adjust the reflection properties, represented by the reflection coefficient. Therefore, movable planar surface 2 is shifted in direction 14, which means in a direction parallel to the x-y-plane as defined by Cartesian coordinate system 10 and orthogonally to the normal vector 15 of the planar surface 2.

In figure 2a to 2c, there are shown different forms of embodiment of the three planar surfaces 2, 3, 4 of the corner reflector 1. Figure 2a shows a trihedral corner reflector having three triangular-shaped planar surfaces 11. The three-dimensional arrangement of the three triangular-shaped planar surfaces 11 is illustrated spatial by the shown Cartesian coordinate system 10 so that all three surfaces 11 are arranged perpendicular to each other. Further, the Cartesian coordinate system 10 is orientated so that the three edges of the perpendicular surfaces are falling conform with the three perpendicular axes of the Cartesian coordinate system 10.

Further, figure 2b shows the same arrangement of three planar surfaces 12, each surface 12 showing a shape of a quarter of a circle. All three surfaces are orientated orthogonally to each other and showing a Cartesian coordinate system 10, which is orientated identically with the three touching edges of the three surfaces.

Additional figure 2c shows a very similar arrangement as shown in figure 2a or 2b with three surfaces 13, each consisting of a quadratic-shaped planar surface 13 and the Cartesian coordinate system as already disclosed in figure 2a and 2b.

For the person skilled in the art, it is obvious that further shapes of the three orthogonal planar surfaces can be realized or that corner reflectors with different shapes of the three planar surfaces 11, 12, 13 can be realized in the scope of the present invention. As long as the area of the planar surfaces show same surface area, the characteristics of reflection behaviour are also very similar. By realizing the present invention and shifting at least one surface of the trihedral corner reflector so that the part of the at least one surface which contributes to the reflection is reduced, the different shaped show properties because the area, which remains for reflection is changing differently in dependence of the shifted distance.

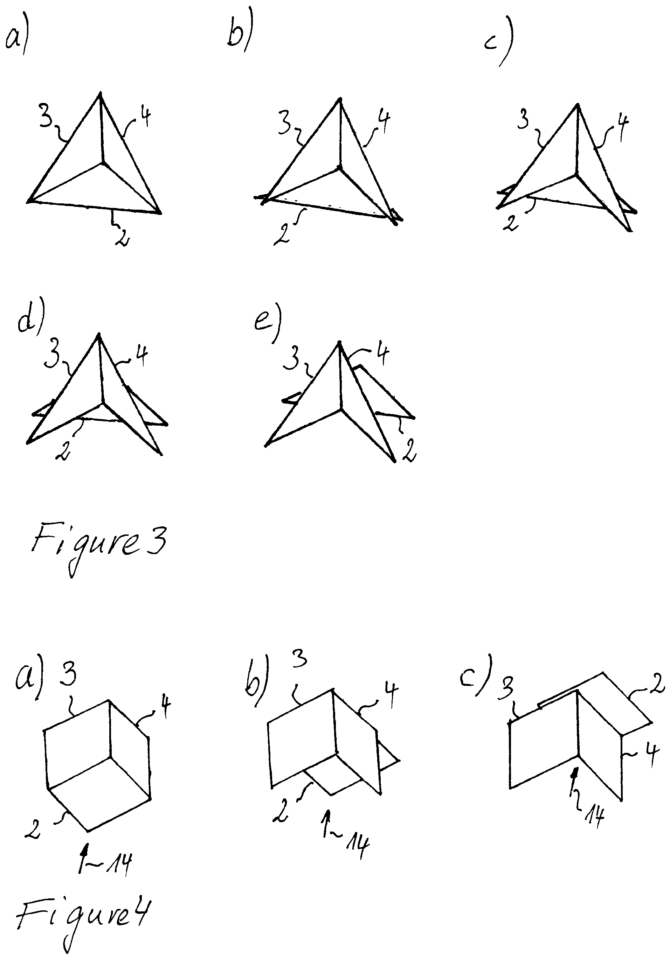

In figures 3a to 3e there is shown the shifting of the at least one movable surface 2 by showing a trihedral corner reflector 2, 3, 4 having three triangular shaped surfaces 11 as shown in the embodiment of figure 2a. Planar surfaces 3 and 4 are orientated vertically and are fixed stationary. Planar surface 2, which is orientated horizontally is the at least one movable surface.

In figure 3a, planar surface 2 shows the same size as surfaces 3 and 4 and surface 2 contributes with 100% of its size to the reflection characteristic of the trihedral corner reflector. In the following figures 3b to 3d, the area of movable surface 2, which contributes to the reflection characteristic of trihedral corner reflector, is reduced stepwise. In the figure 3e, the movable surface 2 has been shifted so far that the area of planar surface 2, which contributes to the reflection characteristic of the trihedral corner reflector is 0% and no reflection of outgoing waves 7, 9 with antiparallel propagation direction as the corresponding inclining waves 6, 8 is realized.

In the figures 3b to 3d, intermediate states between the 100% reflecting area of surface 2 as shown in figure 3a and the 0% reflecting area of surface 2 as shown in figure 3e are shown. In Figure 3b, the planar surface 2 is shifted perpendicular to the normal vector of planar surface 2, so that surface 2 moves symmetrical in direction to vertically orientated surfaces 3 and 4. In figure 3b, the surface area of surface 2, which contributed to the reflection characteristic of the corner reflector is reduced to 77%. Figure 3c shows the further reduction of the reflection surface of planar surface 2 to about 50% of the surface area of figure 3a. Figure 3d shows the situation if the reflecting surface area of planar surface 2 is reduced further to 30% of its original area size as shown in figure 3a.

This shift of planar surface 2 can be realized by using a drive. Especially an electric drive or a pneumatic drive or a hydraulic drive. By attaching an electric drive to the bottom side of planar surface 2, the at least one movable planar surface 2 can be shifted continuously as shown through the figures 3a to 3e and the reflection ration of reflected electromagnetic waves can be tunes step less and continuously.

Further, it is possible to provide a user interface where the user can input a desired reflection ration and the electric drive, which moves planar surface 2 is calibrated so that the control of the user interface operates the electric drive until the desired reflection ration is tuned in.

In figure 4, there are shown 3 drawings 4a to 4c, each showing the same corner reflector consisting of three quadratic planar surfaces 2, 3, 4. The horizontally orientated planar surface 2 is the at least one movable surface and further surfaces 3 and 4, each of them vertically orientated, are fixed stationary. Arrow 14, which is illustrated in every figure 3a to 3c represents the shifting direction of the at least one movable surface 2. This is also the operation direction of the electric, pneumatic or hydraulic drive for shifting the at least one movable surface 2. In figure 4a, the at least one movable, quadratic surface 2 contributes with 100% of its area surface to the reflection characteristic of the trihedral corner reflector. In figure 4c, the portion of the surface area which contributes to the reflection characteristic of the corner reflector arrangement of surface 2 is reduced to 0% so that inclining electromagnetic waves 6, 8 area are not reflected in antiparallel outgoing direction 7, 8. The reflection ratio is Zero. In Figure 4b, movable surface 2 is shifted partially so that a reflection ratio between 0% and 100% can be realized.

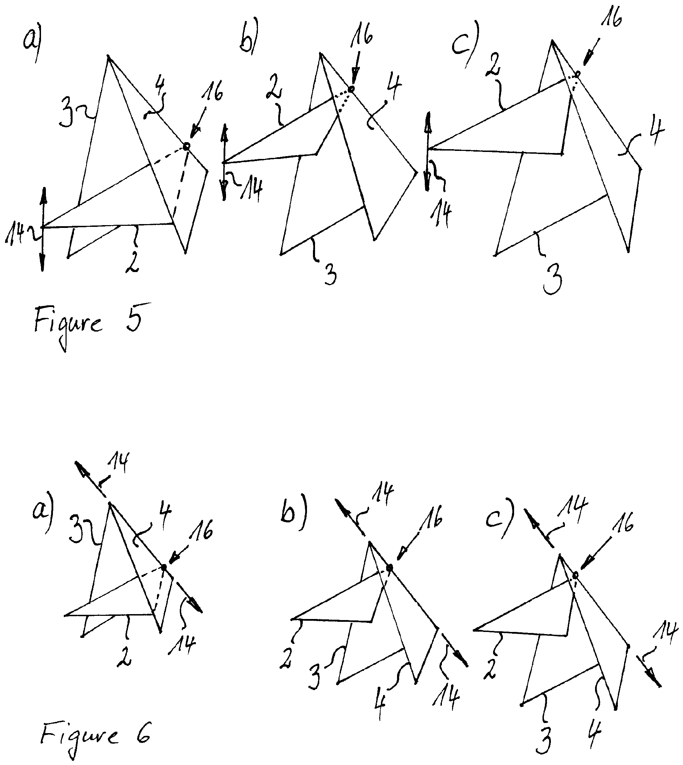

In figure 5 there is shown another embodiment of a trihedral corner reflector, which works similar to the trihedral corner reflector as shown in figures 1 to 4. There are shown surfaces 2, 3 and 4 again, where surfaces 3 and 4 are fixed and are non-movable and the further surface 2 is movable.

The movable surface of figure 5a to 5c is not shifted perpendicular to the normal vector of movable surface 2 so that surface 2 disappears behind non-movable surfaces 3 and 4 as shown in figure 3, but movable surface 2 is shifted in direction of the normal vector of movable surface 2. This is represented by double arrow 14 in figures 5a to 5c, which represents the shifting direction of surface 2. If surface 2 is moved upward in direction 14, the area of fixed surfaces 3 and 4, which contribute to the currently active reflection surface are decreased and the reflection coefficient of the arrangement is decreased. Figure 5a on the left side shows the arrangement with a high reflection coefficient because the parts of surfaces 3 and 4 which are above the plane surface 2 are huge. If Surface 2 is moved upwards, the contacting point 16, which represent the common contact point of all 3 surfaces 2, 3 and 4 moves also upwards so that contact point 16 moves along the edges of surfaces 3 and 4 in which surfaces 3 and 4 are connected fix together. Figure 5b shows the arrangement with a smaller reflection coefficient because surface 2 has moved nearly to the end of common contact edge of surfaces 3 and 4 and only the remaining areas of surfaces 3 and 4, which are situated above the surface 2, contribute to the reflection. Figure 5c shows the arrangement with a even lower reflection coefficient because the contact point 16 has moved nearly to the end of the contact edge between surfaces 3 and 4.

Figure 6 shows a very similar embodiment as shown in figure 5, however the non-movable surfaces 3 and 4 of figure 5 are arranged as movable surfaces 3 and 4 in figure 6 and the movable surface 2 of figure 5 is arranged as non-movable surface 2 in figure 6. Figure 6 can be derived applying a mechanical inversion of the arrangement of figure 5. In figure 6a, the two movable surfaces 3 and 4 are fixed together by a common edge. The two movable surfaces 3 and 4 are moved along the axis of their common edge. The moving direction shown by the two arrows 14, which represent the moving direction of moving surfaces 3 and 4. The moving direction is in line with the common edge of the two movable surfaces 3 and 4 and therefore, the moving direction is in parallel with the normal vector of fixed surface 2.

While the two fixed surfaces 3 and 4 are moved in direction of arrows 14, the contact point 16, which represent the contact point of fixed surface 2 with the two moving surfaces 3 and 4 moves also in direction of arrows 14. As further shown in figure 6b, surface 2 has not been moved but the two movable surfaces 3 and 4 are moved downwards so that the resulting trihedral corner which is constituted by the fixed surface 2 and the area of movable surfaces 3 and 4 which are situated above the surface 2, is very small so that the reflection coefficient of figure 6b is much smaller than the reflection coefficient of figure 6a. Additional figure 6a shows moving surfaces 3 and 4 which is moved nearly to the outermost position so that a minimum reflection coefficient can be achieved.

The arrangements as shown in figure 5 and figure 6 can also comprise one or several electric drives or pneumatic or hydraulic drives or by hand-driven mechanical drives, so that the moving of the at least one or two movable surfaces can be done automatically or mechanically. The arrangements due to figures 5 and 6 can also be equipped with scales so that a calibration of the arrangement can be done for partical usage purposes. The scales or displays of the calibrated arrangements can be calibrated for example in percent of the reflection coefficient or in a normalized number between Zero and One or between Zero and One hundred.

## Claims

1. Corner Reflector (1) for reflecting electromagnetic waves (7, 9) in the same direction as the waves (6, 8) are inclining,
the corner reflector (1) comprising three planar surfaces (2, 3, 4) arranged orthogonally to each other,
**characterized in that**
at least one of the three surfaces (2) is arranged movable,
so that the ratio of the reflected electromagnetic waves (7, 9), referred to the amount of inclining electromagnetic waves (6, 8), can be modified by shifting (14) the movable surface (2).

2. Corner Reflector as claimed in claim 1, **characterized in that** the ratio of the reflected electromagnetic waves (7, 9) is modified by shifting the at least one movable surface (2) in a direction (14), perpendicular to the normal vector (15) of the at least one movable surface (2).

3. Corner Reflector as claimed in claim 1 or 2, **characterized in that** the shifting (14) of the at least one movable surface (2) is shifted in the direction so that the area of the surface, contributing to the reflecting of the electromagnetic waves is diminished and the remaining area of the surface, not contributing to the reflecting of the electromagnetic waves, is shifted to those sides of the non-movable surfaces (3, 4) where no reflection of electromagnetic radiation is effected.

4. Corner Reflector as claimed in claim 1, **characterized in that** the ratio of the reflected electromagnetic waves (7, 9) is modified by shifting the at least one movable surface (2) in a direction (14), parallel to the normal vector (15) of the at least one movable surface (2).

5. Corner Reflector as claimed in claim 4, **characterized in that** the at least one movable surface (2) is moved so that its edges, which are in contact with the other non-movable surfaces (3, 4), remain in contact with the non-movable surfaces (3, 4) while shifting the at least one movable surface (2) in parallel to its normal vector (15).

6. Corner Reflector as claimed in claim 5, **characterized in that** the at least one movable surface (2) is fixed and the two non-movable surfaces (3, 4) are arranged to move commonly in parallel to the normal vector of the at least one movable surface (2) which is fixed.

7. Corner Reflector as claimed in one of the preceding claims, **characterized in that** at least one surface (2, 3, 4) of the corner reflector (1) is made
- from metallic material or
- made from synthetic/plastic material and coated with metallic material.

8. Corner Reflector as claimed in one of the preceding claims, **characterized in that** each surface of the three planar surfaces (2, 3, 4) have
- the shape of a sector of a circle (12) or
- triangular shape (11) or
- quadratic shape (13).

9. Corner Reflector as claimed in one of the preceding claims, **characterized in that** the movable surface (2) is shifted (14) by use of an electric drive, a pneumatic drive, a hydraulic drive or a manually drive.

10. Corner Reflector as claimed in one of the preceding claims, **characterized in that** the present reflection coefficient shown by the use of a scale or a display depending on the extent of the shifting (14) of the at least one movable surface (2).
